# EUROPÄISCHE PATENTSCHRIFT

(11) **EP 1 198 705 B1**
(45) Veröffentlichungstag und Bekanntmachung des Hinweises auf die Patenterteilung: **06.10.2004**
(21) Anmeldenummer: 00958164.6
(22) Anmeldetag: 19.07.2000
(51) Int. Cl.: G01N 23/04

(54) **VERFAHREN UND VORRICHTUNG ZUM DURCHLEUCHTEN VON STÜCKGUT, INSBESONDERE VON GEPÄCKSTÜCKEN WÄHREND DER FÖRDERBEWEGUNG AUF EINER FÖRDERBAHN**
METHOD AND DEVICE FOR X-RAYING ITEMS, ESPECIALLY ITEMS OF LUGGAGE DURING CONVEYANCE ON A CONVEYOR BELT
PROCEDE ET DISPOSITIF POUR PASSER DES MARCHANDISES AUX RAYONS X, NOTAMMENT DES BAGAGES PENDANT LE MOUVEMENT DE TRANSPORT SUR UNE VOIE DE CONVOYAGE

(30) Priorität: 20.07.1999 DE 19934921
(43) Veröffentlichungstag der Anmeldung: 24.04.2002
(73) Patentinhaber: Siemens AG, 80333 München (DE)
(72) Erfinder: ASSMANN, Roland, D-63654 Bündingen (DE); BECKER, Klaus, D-58300 Wetter (DE); OSTHOLT, Rüdiger, D-58300 Wetter (DE)
(86) Internationale Anmeldenummer: PCT/DE2000/002427
(87) Internationale Veröffentlichungsnummer: WO 2001/005685

(56) Entgegenhaltungen:
- EP-A- 0 456 297
- US-A- 3 832 545
- US-A- 4 852 138
- US-A- 5 524 133

## Beschreibung

Die Erfindung betrifft ein Verfahren sowie eine Vorrichtung zum Fördern von Stückgut, insbesondere Gepäckstücken im Verlauf einer Förderbahn, auf der das Stückgut in mehrteiligen Behältern transportiert wird, die jeweils aus einem auf dem Förderer geführten Unterteil und einem das Stückgut aufnehmenden, von dem Unterteil trennbaren schalenförmigen Oberteil bestehen.

Aus dem europäischen Patent EP 0 456 297 B1 ist bereits ein Fördersystem für Stückgut, insbesondere für Gepäck bekannt, das sich im wesentlichen dadurch auszeichnet, dass die einzelnen Gepäckstücke jeweils in einem eigenen Behälter transportiert werden. Diese Behälter mit den Gepäckstücken sind in dem Fördersystem einem endlos umlaufenden Sortierförderer zuführbar. Diese Sortierförderer bestehen im wesentlichen aus einer Vielzahl von in Förderrichtung hintereinander angeordneten und miteinander gekoppelten Fahrwerken, auf denen jeweils eine um eine in Fahrtrichtung verlaufende Horizontalachse seitlich verschwenkbare Tragplatte gelagert ist. Mit Hilfe dieser seitlichen schwenkbaren Tragplatte können die hierauf förderbaren Behälter mit den Gepäckstücken an vorgewählten Zielstellen seitlich gekippt werden, so dass die Gepäckstücke aus den Behältern herausrutschen. Außerdem sind auf der Tragplatte Halteelemente vorgesehen, mit deren Hilfe der Behälter auf der Tragplatte lösbar gehalten wird.

Sollen Gepäckstücke im Zusammenhang mit einer Flugabfertigung nach gefährlichen Stoffen, wie z.B. Sprengstoff durchleuchtet werden müssen, kann es hinderlich sein, wenn der Behälter aus Metall ist, bzw. Bereiche aus Metall aufweist. So sind für die Verwendung in Förderanlagen eines Flughafens Behälter bekannt, die aus einem wannenförmigen Oberteil aus Kunststoff bestehen, das zum Schutz des Behälters in ein komplementär ausgebildetes wannenförmiges Unterteil aus Metall eingesteckt ist. Das Oberteil ist mit dem Unterteil verschraubt, das aus Metall ausgebildete Unterteil weist Führungsflächen oder Führungsstifte für die an den Behälter angreifenden Förderer auf. Derartige Behälter eignen sich nur begrenzt für die vorgeschriebenen und notwendigen Durchleuchtungsvorgänge, weil die vielen Metallteile den abgebildeten Inhalt des Gepäckstückes verfälscht darstellen. Ein Entladen des Behälters für den Durchleuchtungsvorgang des Gepäcks wäre somit erforderlich.

Die US-A-5,524,133 offenbart ein Verfahren zum Durchleuchten von Objekten. Die US-A-4,852,138 beschreibt ein Verfahren zum Fördern von Objekten, wobei die Objekte parallelen Förderbändern zugeführt werden, so dass mehrere Objekte gleichzeitig durchleuchtet werden können; teilbare Behälter werden in diesem Dokument nicht offenbart. Aus der US-A-3,832,545 sind einteilige Behälter zum Transport von zu durchleuchtenden Objekten bekannt.

Der vorliegenden Erfindung liegt die Aufgabe zugrunde, ein Verfahren und eine Vorrichtung der eingangs beschriebenen Art zu schaffen, wobei das Durchleuchten von Stückgut, insbesondere Gepäckstücken während der Förderbewegung auf einer Förderbahn möglich ist, ohne dass das Stückgut aus dem Behälter entfernt werden muss.

Gelöst wird diese Aufgabe durch das Verfahren gemäß Anspruch 1 und die Vorrichtung gemäß Anspruch 6. Vorteilhafte Weiterbildungen der Erfindung ergeben sich aus den auf die beiden unabhängigen Ansprüche rückbezogenen Unteransprüchen.

Ein wesentlicher Teil der Erfindung liegt darin, eine Förderbahn vorzusehen, die im Bereich vor der Durchleuchtungsstation in zwei Förderstrecken aufgeteilt wird, von denen die erste Förderstrecke das Stückgut in dem vom Unterteil abgetrennten schalenförmigen Oberteil durch die Durchleuchtungsstation transportiert und die zweite Förderstrecke das abgetrennte Unterteil an der Durchleuchtungsstation vorbeitransportiert, wobei im Bereich hinter der Durchleuchtungsstation beide Förderstrecken wieder zu einer Förderbahn vereinigt werden, auf der das schalenförmige Oberteil und das Unterteil wieder zu einer Einheit zusammengeführt werden.

Damit lässt sich der Grundgedanke der Erfindung verwirklichen, der darin besteht, Unterteil und Oberteil des Behälters getrennt zu transportieren, wobei nur das mit dem Stückgut beladene Oberteil durch die Durchleuchtungsstation hindurchgeführt wird. Währenddessen wird das Unterteil an der Durchleuchtungsstation vorbeitransportiert, um es nach erfolgter Durchleuchtung hinter der Durchleuchtungsstation wieder mit dem Oberteil zu vereinigen. Dieses Verfahren hat den großen Vorteil, dass das beispielsweise aus Kunststoff ausführbare Oberteil den Durchleuchtungsvorgang nicht stört, während das aus konstruktiven Gründen mit Metallteilen versehene oder komplett aus Metall bestehende Unterteil an der Durchleuchtungsstation vorbeibewegt wird.

Das erfindungsgemäße Verfahren erfordert Maßnahmen zum Trennen und erneuten Verbinden von Oberteil und Unterteil, die nach einem Merkmal der Erfindung darin bestehen, dass das schalenförmige Oberteil und das Unterteil durch im wesentlichen senkrecht gerichtete Relativbewegungen zwischen dem Oberteil und dem Unterteil des Behälters vor der Durchleuchtungsstation voneinander getrennt und hinter der Durchleuchtungsstation lösbar miteinander verriegelt werden.

Vorzugsweise erfolgt die Relativbewegung zwischen dem Oberteil und dem Unterteil des Behälters in dem Bereich vor und hinter der Durchleuchtungsstation durch äußere Krafteinwirkung.

In einer günstigen Ausgestaltung des Verfahrens ist vorgesehen, dass das schalenförmige Oberteil und das Unterteil jedes Behälters in jeweils mindestens einer der jeweiligen Förderstrecke zugeordneten, in Trennrichtung der Behälter divergierenden Führungsschiene geführt sind, die im Verlauf der Förderbewegung ein Trennen der beiden Behälterteile vor der Durchleuchtungsstation und durch Konvergieren der Führungsschienen entgegen der Trennrichtung hinter der Durchleuchtungsstation ein Zusammenführen der synchron transportierten Behälterteile bewirken.

Durch das Divergieren der Führungsschienen werden die Behälter an ihren Führungen auseinandergedrückt, wodurch sich ihre Verriegelungen lösen. Wie nach einem weiteren Merkmal der Erfindung vorgesehen, verlaufen die Förderstrecken im Bereich der Durchleuchtungsstation im wesentlichen parallel zueinander; erst hinter der Durchleuchtungsstation konvergieren die Führungsschienen, so dass die Behälter, die während der Transportbewegung synchron verfahren werden, durch Ineinanderdrücken ihrer Verriegelungen wieder miteinander verbunden werden.

Eine Vorrichtung zur Durchführung des erfindungsgemäßen Verfahrens weist die Merkmale des Anspruchs 6 auf und ist vorzugsweise mit einer Verriegelung für die Behälter versehen, die aus mindestens einem in ein Halteelement einrastbaren Zapfen besteht, der bzw. die am Ober- oder Unterteil des Behälters angeordnet ist bzw. sind. Der Zapfen wird bzw. die Zapfen werden auf dem Förderweg vor der Durchleuchtungsstation aus dem Halteelement herausgedrückt, so dass beide Behälterteile unabhängig voneinander auf den unterschiedlichen Förderstrecken transportiert werden können.

In einer Ausgestaltung der Erfindung ist vorgesehen, dass der Zapfen der Verriegelung an seinem dem Halteelement zugewandten Ende eine kugelförmige Erweiterung aufweist und das Halteelement zur Bildung eines Schnappelementes im wesentlichen aus quer zum Zapfen über Federelemente vorgespannten, die kugelförmige Erweiterung hintergreifenden Kugelelementen besteht, die quer zur Längserstreckung des Zapfenelementes verschiebbar geführt sind.

Eine andere einfache Verriegelung nach der Erfindung ist dadurch gekennzeichnet, dass das Halteelement aus einer vorzugsweise in ein Elastomer oder ähnlichen elastischen Werkstoff eingebrachten Bohrung besteht, die den einsteckbaren Zapfen mindestens teilweise umgreift und reibschlüssig klemmt. In einem solchen Fall kann z.B. der Zapfen einen geringfügig größeren Durchmesser als die Bohrung aufweisen, so dass beim Einstecken des Zapfens der elastische Werkstoff zurückweicht und sich gleichzeitig reibschlüssig an die Außenoberfläche des Zapfens anlegt und diesen hält.

In einer weiteren günstigen Ausgestaltung der Erfindung ist vorgesehen, dass die Bohrung als Sackbohrung ausgebildet ist, die in ihrem Öffnungsbereich eine Einschnürung aufweist, die eine den Zapfen umschließende Dichtlippe bildet. Beim Eindrücken des Zapfens in die Bohrung entweicht die verdrängte Luft durch die zurückweichende Dichtlippe nach außen, die dann den Zapfen dichtend umschließt. Beim Herausziehen des Zapfens aus der Bohrung kann zunächst keine Luft eindringen, so dass das beim Herausziehen entstehende Vakuum den Zapfen bis zu einer bestimmten Kraft hält.

Vorzugsweise ist der Zapfen aus einem Metall mit glatter polierter Oberfläche gefertigt, die dicht an dem elastischen Kunststoff anliegt.

In anderen Ausgestaltungen der Erfindung ist vorgesehen den Zapfen elastisch einstellbar aufzuhängen und die Bohrung im Öffnungsbereich trichterförmig zu erweitern. Auch kann der Zapfen an seinem freien Ende mit einem Kugelkopf versehen sein, der in einer Weiterbildung der Erfindung am inneren Ende der Bohrung in einer korrespondierenden Ausnehmung in dem elastischen Kunststoffwerkstoff reib- und/oder formschlüssig klemmbar ist. Die elastische Aufhängung des Zapfens ermöglicht wie die trichterförmig erweiterte Bohrung ein sicheres Zusammenführen des Oberteils und des Unterteils; der Zapfen kann sich im Toleranzbereich auf die Bohrung bzw. umgekehrt einstellen.

Um Stöße abzufangen und den Verschleiß des elastischen Kunststoffes zu mindern ist in einer weiteren Ausgestaltung der Erfindung vorgesehen, dass im Öffnungsbereich der Bohrung und/oder auf der dem Oberteil des Behälters zugewandten Oberseite des Halteelementes als Stoßdämpfer wirkende Armierungen in den elastischen Kunststoffwerkstoff eingelassen sind. Diese Armierungen können aus einem festen oder einem elastischen Material geringerer Elastizität als die des die Bohrung umschließenden elastischen Kunststoffes ausgebildet seien.

Zum elastischen Aufhängen des Zapfens ist vorgesehen, dass der Fußbereich des Zapfens in einen Kunststoff oder Gummiwerkstoff eingebettet ist.

Um den Durchleuchtungsvorgang nicht zu behindern ist in einer weiteren Ausgestaltung der Erfindung vorgesehen, dass das Oberteil des Behälters in an sich bekannter Weise aus Kunststoff und das Unterteil des Behälters aus Metall hergestellt ist. Der Kunststoff behindert nicht die Durchleuchtung des Stückgutes, während das Unterteil die notwendige Stabilität zum Transport auch schwerer Stückgutteile sicherstellt.

Um Stückgut, insbesondere Gepäckstücke im Behälter aufnehmen zu können, ohne dass diese Teile beim Fördern herausfallen, ist das Oberteil des Behälters schalenförmig ausgebildet, wobei nach einer besonderen Ausgestaltung der Erfindung das Oberteil des Behälters komplementär zu dem Unterteil des Behälters ausgebildet und in dieses einsteckbar ist.

Ein Ausführungsbeispiel der Erfindung ist in der Zeichnung dargestellt und wird nachfolgend beschrieben. Es zeigt
- Figur 1: eine Ansicht eines Abschnitts einer Förderbahn für in Behältern geförderte Fluggepäckstücke im Bereich einer Durchleuchtvorrichtung,
- Figur 2: eine Ausschnittsvergrößerung von Figur 1 aus dem Bereich einer vor der Durchleuchtvorrichtung angeordneten Trennstation für einen Behälter,
- Figur 3: eine Seitenansicht eines Behälters für den Transport von Fluggepäckstücken,
- Figur 4: eine Draufsicht auf Figur 3,
- Figur 5: eine Vorderansicht von Figur 3,
- Figur 6: eine Ansicht gemäß Figur 5, jedoch mit einem in ein Ober- und ein Unterteil geteilten Behälter,
- Figur 7: ein Verbindungselement für das Zusammenfügen eines Ober- und eines Unterteils des Behälters,
- Figur 8: das Verbindungselement gemäß Figur 7 im zusammengefügten Zustand und
- Figuren 9 und 10: ein anderes Verbindungselement für das Zusammenfügen eines Ober und eines Unterteils des Behälters und

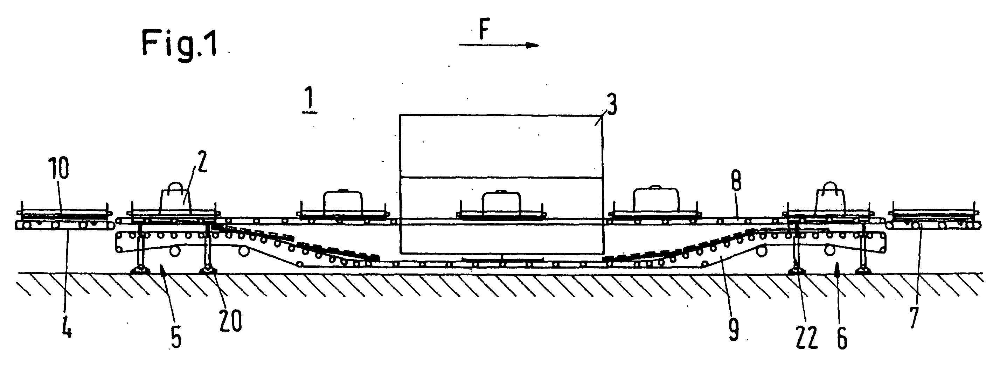

Die Figur 1 zeigt eine Ansicht eines Abschnittes einer Förderbahn 1 für Stückgut 2, insbesondere Fluggepäckstücke, in dem Bereich einer Durchleuchtvorrichtung 3 für das Stückgut 2. Die Förderbahn 1 besteht im wesentlichen aus einer als Doppelgurtförderer ausgebildeten Zuführförderbahn 4, die in Förderrichtung gesehen von einer Trennstation 5, der Durchleuchtvorrichtung 3, einer Zusammenführstation 6 sowie einer Weiterführförderbahn 7 gefolgt ist. Zwischen der Zuführförderbahn 4 und der Weiterförderbahn 7 und somit bereits im Bereich der Trennstation 5 und der Zusammenführstation 6 sind zwei parallel in Förderrichtung F verlaufende Förderstrecken 8 und 9 vorgesehen. Es handelt sich hierbei um eine obere Förderstrecke 8 sowie eine untere Förderstrecke 9.

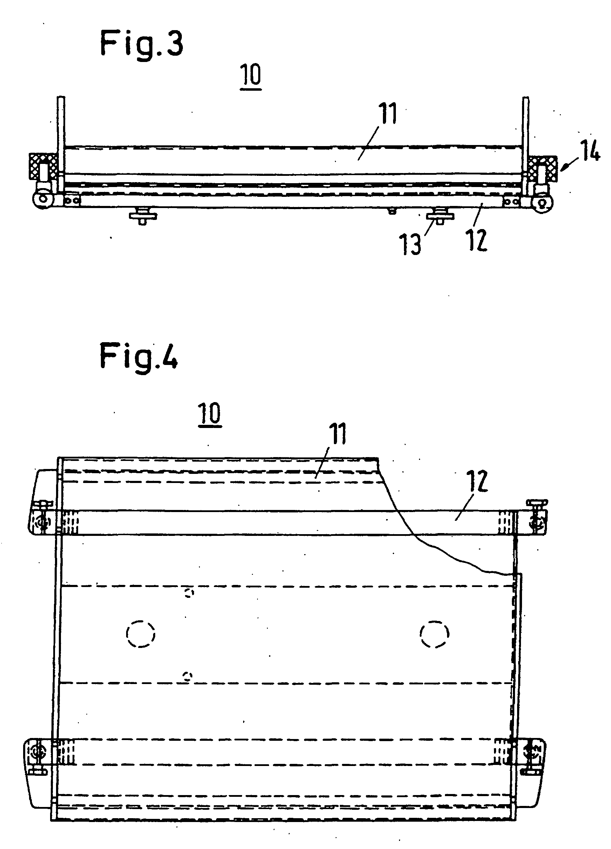

Auf der Förderbahn 1 werden Behälter 10 gefördert, in denen zur Schonung und leichteren Identifizierung des Stückgutes 2 nur jeweils ein Stückgutteil 2 transportiert wird. Den Figuren 3 bis 6 ist der Aufbau der Behälter zu entnehmen. Diese an sich bekannten Behälter 10 bestehen aus einem wannenförmigen Oberteil 11 aus Kunststoff, vorzugsweise PE, HDPE oder ABS das zur Erhöhung der Widerstandsfähigkeit des Oberteils in ein nahezu komplementär ausgebildetes ebenfalls wannenförmiges Unterteil 12 eingesteckt und in der Ausführung gemäß dem Stand der Technik gewöhnlich mit dem Oberteil 11 verschraubt ist. Hingegen sieht der Behälter 10 der vorliegenden Erfindung vor, dass das Unterteil 12 aus Metall von dem Oberteil 11 als Kunststoff trennbar ist, um den Durchleuchtvorgang in der Durchleuchtvorrichtung nicht durch das metallische Unterteil 12 zu stören und gleichzeitig vorteilhafterweise das Stückgut 2 in dem Oberteil 11 des Behälters 10 weiterfördern zu können. Es wird somit vermieden, dass das Stückgut 2 für den Durchleuchtvorgang in einen weiteren Behälter 10 umgeladen werden muss. Derartige Umladevorgänge können fehlerhaft sein, so dass das Stückgutteil 2 seinen Zielort nicht oder nicht rechtzeitig erreichen kann. Das Unterteil 12 des Behälters 10 ist an seiner Unterseite mit zwei in Förderrichtung F gesehen hintereinander sowie mit Abstand zueinander angeordneten Führungsrollen 13 versehen, die den Behälter 10 im Bereich der gesamten Förderbahn 1 entlang einer in Förderrichtung F verlaufenden und nicht dargestellten Führungsschiene führen. Um das Oberteil 11 und das Unterteil 12 des Behälters 10 einerseits trennen und andererseits auch wieder zu einer Baueinheit zusammenführen zu können, sind in Förderrichtung F gesehen vorne und hinten an dem Behälter 10 Verbindungselemente 14 vorgesehen.

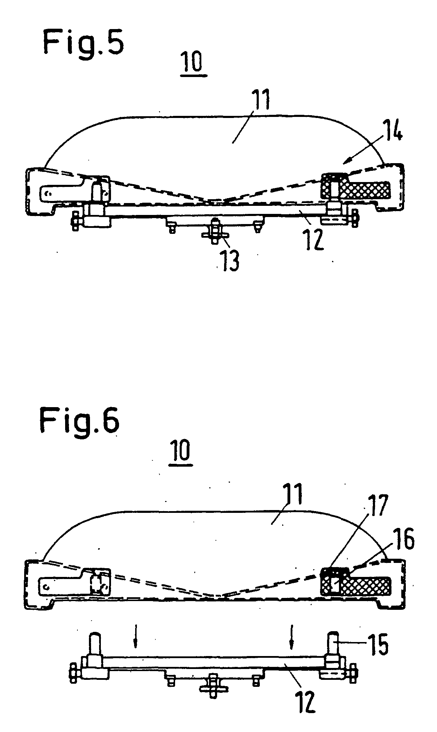

Diese Verbindungselemente 14 können beispielsweise als Verriegelungselemente oder einer Kombination aus einem Zapfenelement und einem federvorgespannten Schnappelement ausgebildet sein. Vorzugsweise sind jedoch die Verbindungselemente 14 jeweils aus einem sich quer und senkrecht zur Förderrichtung F erstreckenden Bolzen 15 ausgebildet (Figuren 6 bis 10), der an dem Unterteil 12 angeordnet ist. Der Bolzen 15 ist in eine von den Abmessungen her komplementär ausgebildete Bohrung 16 einsteckbar, die in einem Halteelement 17, das vorzugsweise aus Vulkolan hergestellt ist, angeordnet ist. Diese Halteelemente 17 sind in Förderrichtung F gesehen jeweils an der Vorder- und an der Hinterseite des Oberteils 11 des Behälters 10 angeordnet.

Der Figur 4, die eine Draufsicht auf den Behälter 10 zeigt, ist zu entnehmen, dass jeweils nahe der Eckpunkte der in etwa rechteckigen Ober- und Unterteile 11, 12 des Behälters 10 vier Verbindungselemente 14 angeordnet sind.

Um einerseits eine Redundanz der Verbindungselemente 14 aus den Bolzen 15 und den Bohrungen 16 zu schaffen, hat es sich als vorteilhaft herausgestellt, jeweils vier bzw. fünf Verbindungselemente 14 in Förderrichtung gesehen vorne und hinten an dem Behälter 10 vorzusehen. Des weiteren befinden sich diese Verbindungselemente 14 aus Stabilitätsgründen von den Eckpunkten des Oberteils 11 in Richtung der in Förderrichtung F verlaufenden Mittellinie M des Behälters versetzt angeordnet. Hierdurch wird einerseits gewährleistet, dass die Verbindungselemente 14 sich nicht im Bereich der häufig auf Stoß beanspruchten Eckbereiche des Behälters 10 befinden. Außerdem wird durch einen ausreichenden Abstand der Verbindungselemente 14 zur Mittellinie M des Behälters 10 erreicht, dass auch bei Kippbewegungen des Behälters 10 zum Entleeren des Stückgutes 2 aus dem Behälter 10 gewährleistet ist, dass durch den somit vorhandenen Hebelarm zwischen der Mittellinie M und den jeweiligen Verbindungselementen 14 die Bolzen 15 in den Bohrungen 16 sicher halten.

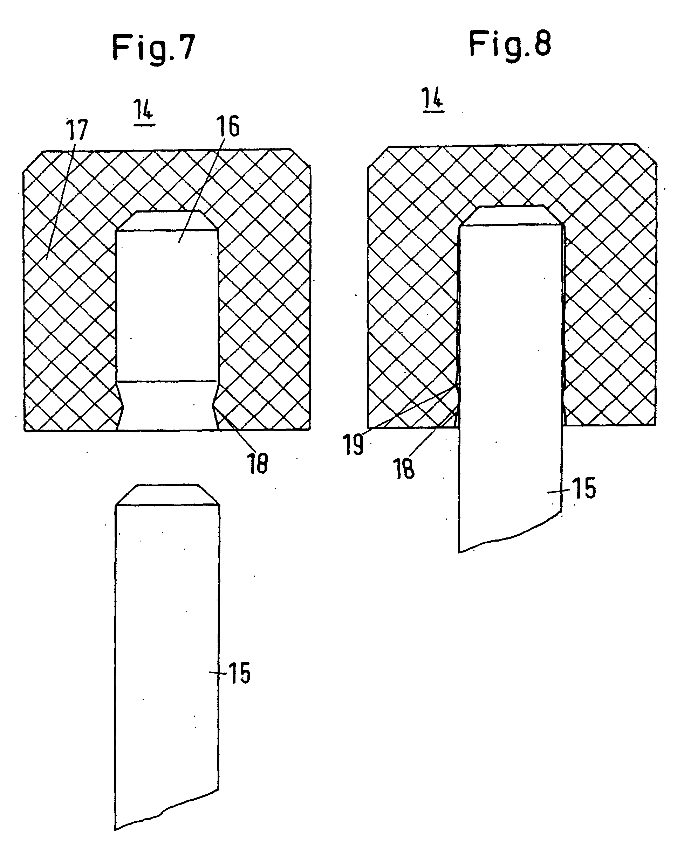

Des weiteren zeigen die Figuren 7 und 8 eine Detailansicht der Verbindungselemente 14 im getrennten Zustand (s. Figur 7) sowie im zusammengefügten Zustand (s. Fig. 8). Es ist ersichtlich, dass die Bohrung 16 in dem Halteelement 17 im Bereich ihres unteren offenen Endes eine Einschnürung 18 aufweist, die die Funktion einer Dichtlippe hat. Somit kann erreicht werden, dass bei in die Bohrung 16 gesteckten Bolzen 15 entsprechend Figur 8 zwischen der Wandung des Bolzens 15 und der Innenwandung der Bohrung 16 sowie oberhalb der Einschnürung 18 ein Hohlraum 19 entsteht und somit der Bolzen 15 in der Bohrung 16 zusätzlich über eine Art Unterdruckeffekt in der Bohrung 16 gehalten wird. Hierdurch kann die Verbindung von dem Oberteil 11 und dem Unterteil 12 des Behälters 10 sicherer gestaltet werden.

Darüber hinaus haben jedoch Versuche gezeigt, dass auch ohne die Einschnürung 18 alleine über einen Passsitz zwischen der Bohrung 16 und dem Bolzen 15 eine ausreichende Haltekraft zwischen dem Oberteil 11 und dem Unterteil 12 zustande kommt, so dass auch eine Kippbeanspruchung des Behälters 10 ohne deren ungewollte Trennung möglich ist.

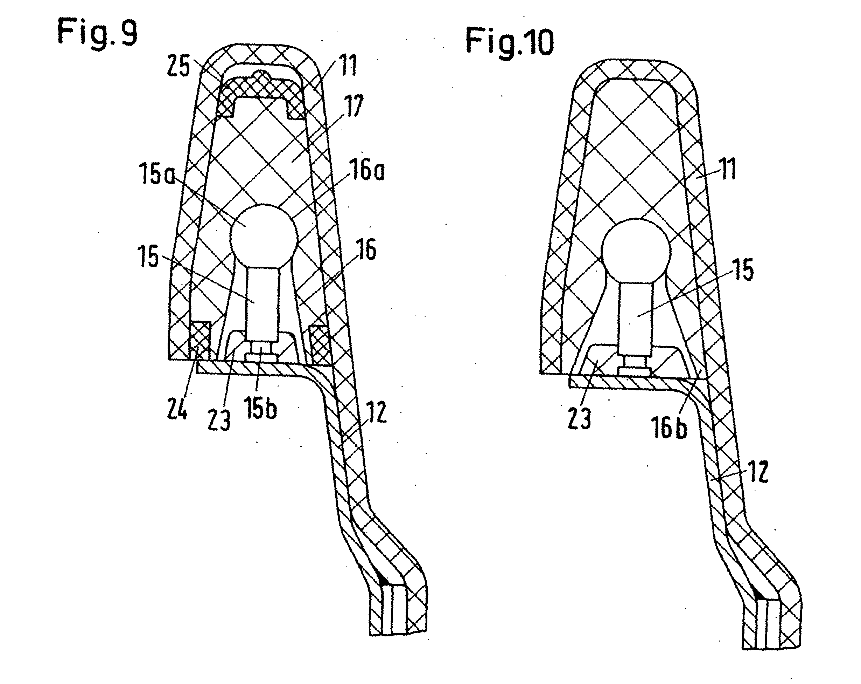

In den Figuren 9 und 10 ist eine weitere günstige Ausgestaltung Verbindung des Oberteils 11 und des Unterteils 12 jedes Behälters 10 dargestellt. In diesem Fall ist die Bohrung in dem aus Vulkolan hergestellten Halteelement 17 nach unten trichterförmig erweitert, so dass das mit einem Kugelkopf 15a versehene freie Ende des Zapfens 15 leicht in die Bohrung 16 einführbar ist. Der Kugelkopf 15a rastet in seiner Endstellung in eine entsprechende Ausformung der Bohrung 16 ein und hält den Zapfen in der Art eines Druckknopfes fest. Um das Einführen des Zapfens 15 in die Bohrung 16 zusätzlich zu erleichtern, ist der Zapfen an seinem unteren Ende elastisch eingespannt, wozu dieser vorzugsweise in eine Vulkolan- oder Gummimasse eingebettet ist.

Wie in Figur 9 dargestellt ist, kann die elastische Kunststoffmasse des Halteelementes 17 im Öffnungsbereich der Bohrung sowie auf seiner dem Oberteil 11 des Behälters 10 zugewandten Oberseite mit verschleißfesterem Werkstoff 24 und 25 armiert sein, um Stöße abzufangen und den Verschleiß zwischen dem Oberteil 11 und dem Unterteil 12 beim Verbinden und Trennen dieser Teile zu mindern.

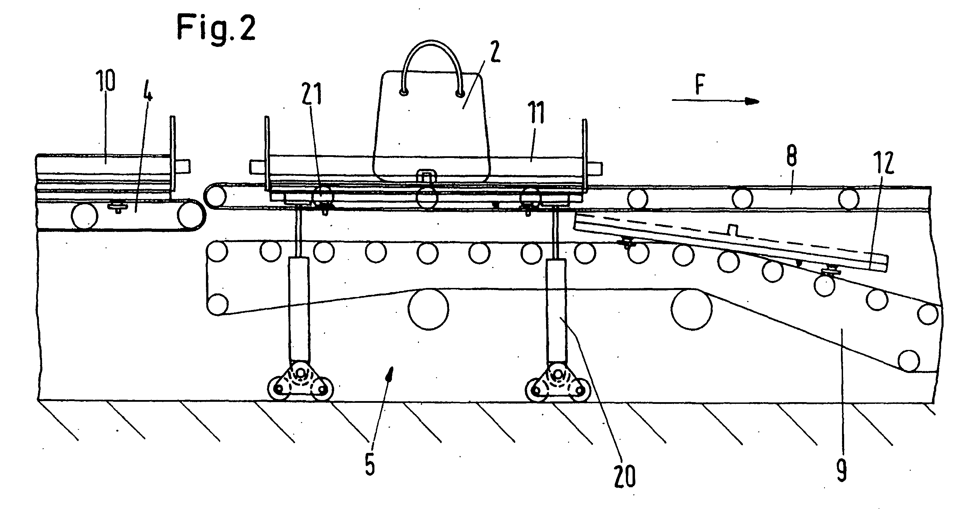

Anhand der Figuren 1 und 2 wird nachfolgend die Funktion der Förderbahn 1 im Bereich der Durchleuchtvorrichtung 3 näher erläutert. Ein gemäß der Figuren 3 bis 10 trennbar ausgestalteter Behälter 10 wird über eine Zuförderbahn 4 in eine Trennstation 5.gefördert. In dieser Trennstation 5 wird während der Förderbewegung über eine Trennvorrichtung 20 das Unterteil 12 des Behälters 10 von dem Oberteil 11 des Behälters 10 nach unten in Richtung der unteren Förderstrecke 9 abgezogen. Hierbei werden die Bolzen 15 vorzugsweise schlagartig aus den Bohrungen 16 herausgezogen. Durch den schlagartigen Trennimpuls wird erreicht, da die Verbindung zwischen den metallenen Bolzen 15 und den Bohrungen aus Vulkolan leicht gelöst werden kann. Bei dem Trennvorgang wird das Oberteil 11 des Behälters seitlich von den Rollen 21 der als Doppelgurtförderbahn ausgeführten oberen Förderstrecke 8 abgestützt. Das von der Trennvorrichtung 20 abgetrennte Unterteil 12 wird anschließend von der ebenfalls als Doppelgurtförderbahn ausgebildeten unteren Förderstrecke 9 in Förderrichtung F gesehen parallel zur oberen Fördererstrecke 8 gefördert, jedoch außerhalb und unterhalb der Durchleuchtvorrichtung 3 an dieser vorbeigeführt.

Es ist auch möglich, dass die Unterteile 12 im Bereich der Trennstation 5 einem nicht dargestellten Puffer zugeführt werden und dann einer weiteren Pufferstation im Bereich der Zusammenführstation 6 zugeführt werden.

Das Oberteil 11 der Behälter 10 wird dann mit dem darin befindlichen Stückgutteil 2 durch die Durchleuchtvorrichtung 3 geführt und anschließend über die obere Förderstrecke 8 zu der Zusammenführstation 6. Im Bereich der Zusammenführstation 6 wird durch eine Zusammenführvorrichtung 22 das Unterteil 12 von der unteren Förderstrecke 9 von unten an das Oberteil 11 des Behälters 10 angedrückt. Hierbei gleiten die Bolzen 15 wieder in die Bohrungen 16 des Oberteils 11. Das Oberteil 11 wird dabei in der oberen Förderstrecke 8 gehalten. Anschließend wird der wieder zusammengefügte Behälter 10 an die Weiterführförderbahn 7 übergeben.

### Bezugszeichenliste

- 1: Förderbahn
- 2: Stückgut
- 3: Durchleuchtvorrichtung
- 4: Zuführförderbahn
- 5: Trennstation
- 6: Zusammenführstation
- 7: Weiterführförderer
- 8: obere Förderstrecke
- 9: untere Förderstrecke
- 10: Behälter
- 11: Oberteil
- 12: Unterteil
- 13: Führungsrolle
- 14: Verbindungselement
- 15: Bolzen
- 16: Bohrung
- 17: Halteelement
- 18: Einschnürung
- 19: Hohlraum
- 20: Trennvorrichtung
- 21: Rollen
- 22: Zusammenführvorrichtung
- 23: elastische Befestigung
- 24: Armierung
- 25: Armierung
- F: Fördervorrichtung
- M: Mittellinie

## Patentansprüche

1. Verfahren zum Fördern von Stückgut, insbesondere Gepäckstücken durch eine Durchleuchtungsstation im Verlauf einer Förderbahn, auf der das Stückgut in mehrteiligen, aus jeweils einem auf dem Förderer geführten Unterteil und einem das Stückgut aufnehmenden, von dem Unterteil trennbaren schalenförmigen Oberteil bestehenden Behälter transportiert wird,
**dadurch gekennzeichnet,**
**dass** das Oberteil von dem Unterteil vor der Durchleuchtungsstation getrennt wird und
**dass** das Stückgut in dem vom Unterteil abgetrennten schalenförmigen Oberteil durch die Durchleuchtungsstation transportiert wird, während das abgetrennte Unterteil an der Durchleuchtungsstation vorbeitransportiert und im Bereich hinter der Durchleuchtungsstation für die weitere Förderung das schalenförmige Oberteil und das Unterteil wieder zu einer Einheit zusammengefügt werden.

2. Verfahren zum Fördern von Stückgut nach Anspruch 1,
**dadurch gekennzeichnet,**
**dass** das schalenförmige Oberteil und das Unterteil durch im wesentlichen senkrecht gerichtete Relativbewegungen zwischen dem Oberteil und dem Unterteil des Behälters vor der Durchleuchtungsstation voneinander getrennt und hinter der Durchleuchtungsstation lösbar miteinander verriegelt werden.

3. Verfahren zum Fördern von Stückgut nach Anspruch 1 und 2,
**dadurch gekennzeichnet,**
**dass** die Relativbewegungen zwischen dem Oberteil und dem Unterteil des Behälters im Bereich vor und hinter der Durchleuchtungsstation durch äußere Krafteinwirkung hervorgerufen wird.

4. Verfahren zum Fördern von Stückgut nach Anspruch 1 bis 3,
**dadurch gekennzeichnet,**
**dass** das schalenförmige Oberteil und das Unterteil jedes Behälters in jeweils mindestens einer der jeweiligen Förderstrecke zugeordneten, in Trennrichtung der Behälter divergierenden Führungsschiene geführt sind, die im Verlauf der Förderbewegung ein Trennen der beiden Behälterteile vor der Durchleuchtungsstation und durch Konvergieren der Führungsschienen entgegen der Trennrichtung hinter der Durchleuchtungsstation ein Zusammenführen der synchron transportierten Behälterteile bewirken.

5. Verfahren zum Fördern von Stückgut nach einem der Ansprüche 1 bis 4,
dass die Förderstrecken im Bereich der Durchleuchtungsstation im wesentlichen parallel zueinander verlaufen.

6. Vorrichtung zum Fördern von Stückgut (2), insbesondere Gepäckstücken durch eine Durchleuchtungsstation (3) im Verlauf einer Förderbahn (4, 7), auf der das Stückgut (2) in mehrteiligen, aus jeweils einem auf der Förderbahn (4, 7) geführten Unterteil (12) und einem das Stückgut (2) aufnehmenden, von dem Unterteil (12) trennbaren schalenförmigen Oberteil (11) bestehenden Behälter (10) transportiert wird, zur Durchführung des Verfahrens nach einem der Ansprüche 1 bis 5,
**dadurch gekennzeichnet,**
**dass** die Förderbahn (4, 7) vor der Durchleuchtungsstation (3) eine Trennstation (5) aufweist, in der das Oberteil (11) von dem Unterteil (12) abtrennbar ist,
**dass** im Bereich der Durchleuchtungsstation (3) zwei Förderstrecken (8, 9) vorgesehen sind, von denen die eine (8) jeweils das abgetrennte Oberteil (11) mit dem Stückgut (2) durch die Durchleuchtungsstation (3) transportiert und die andere (9) das abgetrennte Unterteil (12) außerhalb der Durchleuchtungsstation (3) an dieser vorbeiführt, und dass die Förderbahn (4, 7) hinter der Durchleuchtungsstation (3) eine Zusammenführvorrichtung (22) aufweist, in der das Oberteil (11) und das Unterteil (12) des Behälters (10) für die weitere Förderung wieder zu einer Einheit zusammenfügbar sind.

7. Vorrichtung nach Anspruch 6,
**dadurch gekennzeichnet,**
**dass** für die Trennung und Zusammenfügung des Oberteils (11) und des Unterteils (12) des Behälters (10) eine lösbare Verriegelung vorgesehen ist, die aus mindestens einem in ein Halteelement (17) einrastbaren Zapfen (15) besteht, der bzw. die am Ober- (11) oder Unterteil (12) des Behälters (10) angeordnet ist bzw. sind.

8. Vorrichtung zum Fördern von Stückgut nach Anspruch 7,
**dadurch gekennzeichnet,**
**dass** der Zapfen (15) an seinem dem Halteelement (17) zugewandten Ende eine kugelförmige Erweiterung aufweist und das Halteelement (17) zur Bildung eines Schnappelementes im wesentlichen aus quer zum Zapfen (15) über Federelemente vorgespannte, die kugelförmige Erweiterung hintergreifenden Kugelelementen besteht, die quer zur Längserstreckung des Zapfens (15) verschiebbar geführt sind.

9. Vorrichtung zum Fördern von Stückgut nach Anspruch 7,
**dadurch gekennzeichnet,**
**dass** das Halteelement (17) aus einer vorzugsweise in einen Elastomer oder ähnlichem elastischen Werkstoff eingebrachten Bohrung (16) besteht, mit der der elastische Kunststoffwerkstoff den einsteckbaren Zapfen (15) mindestens teilweise umgreift und reibschlüssig klemmt.

10. Vorrichtung zum Fördern von Stückgut nach Anspruch 9,
**dadurch gekennzeichnet,**
**dass** die Bohrung (16) als Sackbohrung ausgebildet ist, die in ihrem Öffnungsbereich eine Einschnürung (18) aufweist, die eine den Zapfen (15) umschließende Dichtlippe bildet.

11. Vorrichtung zum Fördern von Stückgut nach Ansprüchen 9 und 10,
**dadurch gekennzeichnet,**
**dass** der Zapfen (15) aus einem Metall mit glatter polierter Oberfläche besteht.

12. Vorrichtung zum Fördern von Stückgut nach einem der Ansprüche 9 bis 11,
**dadurch gekennzeichnet,**
**dass** der Zapfen (15) elastisch einstellbar aufgehängt ist.

13. Vorrichtung zum Fördern von Stückgut nach einem der Ansprüche 9 bis 12,
**dadurch gekennzeichnet,**
**dass** die Bohrung (16) im Öffnungsbereich (16b) trichterförmig erweitert ist.

14. Vorrichtung zum Fördern von Stückgut nach einem der Ansprüche 9 bis 13,
**dadurch gekennzeichnet,**
**dass** der Zapfen (15) an seinem freien Ende mit einem Kugelkopf (15a) versehen ist.

15. Vorrichtung zum Fördern von Stückgut nach Anspruch 14,
**dadurch gekennzeichnet,**
**dass** der Kugelkopf (15a) am inneren Ende der Bohrung (16) in einer korrespondierenden Ausnehmung in dem elastischen Kunststoffwerkstoff reib- und formschlüssig klemmbar ist.

16. Vorrichtung zum Fördern von Stückgut nach einem der Ansprüche 9 bis 15,
**dadurch gekennzeichnet,**
**dass** im Bereich der trichterförmigen Erweiterung der Bohrung (16) und/oder auf der dem Oberteil (11) des Behälters (10) zugewandten Oberseite des Halteelementes (17) als Stoßdämpfer wirkende Armierungen (24, 25) in den elastischen Kunststoffwerkstoff eingelassen sind.

17. Vorrichtung zum Fördern von Stückgut nach Anspruch 12,
**dadurch gekennzeichnet,**
**dass** der Fußbereich des Zapfens (15) in einen Kunststoff- oder Gummiwerkstoff eingebettet ist.

18. Vorrichtung zum Fördern von Stückgut nach einem der Ansprüche 7 bis 17,
**dadurch gekennzeichnet,**
**dass** das Oberteil (11) des Behälters (10) aus Kunststoff und das Unterteil (12) des Behälters (10) aus Metall hergestellt ist.

19. Vorrichtung zum Fördern von Stückgut nach Anspruch 18,
**dadurch gekennzeichnet,**
**dass** das Oberteil (11) des Behälters (10) schalenförmig ausgebildet ist.

20. Vorrichtung zum Fördern von Stückgut nach einem der Ansprüche 7 bis 19,
**dadurch gekennzeichnet,**
**dass** das Oberteil (11) des Behälters (10) komplementär zu dem Unterteil (12) des Behälters (10) ausgebildet und in dieses einsteckbar ist.

## Claims

1. Method for conveying items, in particular items of luggage, through an X-ray station, travelling on a conveyor belt, on which the items are transported in multi-part containers, which respectively comprise a lower part, which is carried on the conveyor, and a tray-shaped upper part, which receives the items and can be separated from the lower part, **characterized in that** the upper part is separated from the lower part upstream of the X-ray station and **in that** the item is transported through the X-ray station in the tray-shaped upper part, detached from the lower part, while the detached lower part is transported past the X-ray station and the tray-shaped upper part and the lower part are reassembled to form one unit in the region downstream of the X-ray station for further conveyance.

2. Method for conveying items according to Claim 1, **characterized in that** the tray-shaped upper part and the lower part are separated from each other upstream of the X-ray station and are releasably locked to one another downstream of the X-ray station by substantially vertically directed relative movements between the upper part and the lower part of the container.

3. Method for conveying items according to Claims 1 and 2, **characterized in that** the relative movements between the upper part and the lower part of the container in the region upstream and downstream of the X-ray station is caused by external force being applied.

4. Method for conveying items according to Claims 1 to 3, **characterized in that** the tray-shaped upper part and the lower part of each container are guided in at least one guiding rail in each case, which are assigned to the respective conveying section, diverge in the separating direction of the containers and in the course of the conveyance bring about a separation of the two container parts upstream of the X-ray station and, by converging of the guiding rails counter to the separating direction, bring about an assembly of the synchronously transported container parts downstream of the X-ray station.

5. Method for conveying items according to one of Claims 1 to 4, that the conveying sections run substantially parallel to one another in the region of the X-ray station.

6. Device for conveying items (2), in particular items of luggage, through an X-ray station (3), travelling on a conveyor belt (4, 7), on which the items (2) are transported in multi-part containers (10), which respectively comprise a lower part (12), which is carried on the conveyor (4, 7), and a tray-shaped upper part (11), which receives the items (2) and can be separated from the lower part (12), for carrying out the method according to one of Claims 1 to 5, **characterized in that** the conveyor belt (4, 7) has upstream of the X-ray station (3) a separating station (5), in which the upper part (11) can be detached from the lower part (12), **in that** two conveying sections (8, 9) are provided in the region of the X-ray station (3), of which sections one (8) respectively transports the detached upper part (11) with the item (2) through the X-ray station (3) and the other (9) takes the detached lower part (12) outside the X-ray station (3), past the latter, and **in that** the conveyor belt (4, 7) has downstream of the X-ray station (3) an assembling device (22), in which the upper part (11) and the lower part (12) of the container (10) are reassembled to form one unit for further conveyance.

7. Device according to Claim 6, **characterized in that** a releasable locking mechanism, which comprises at least one pin (15) which can engage in a holding element (17) and which is or are arranged on the upper part (11) or lower part (12) of the container (10), is provided for the separation and assembly of the upper part (11) and the lower part (12) of the container (10).

8. Device for conveying items according to Claim 7, **characterized in that** the pin (15) has at its end facing the holding element (17) a spherical widening and, to form a snap element, the holding element (17) substantially comprises ball elements, which are prestressed transversely in relation to the pin (15) by means of spring elements, engage behind the spherical widening and are displaceably guided transversely in relation to the longitudinal extent of the pin (15).

9. Device for conveying items according to Claim 7, **characterized in that** the holding element (17) comprises a bore (16), which is preferably made in an elastomer or similar flexible material and by which the flexible plastic material engages at least partly around the insertable pin (15) and frictionally clamps it.

10. Device for conveying items according to Claim 9, **characterized in that** the bore (16) is formed as a blind bore, which has in its opening region a constriction (18) which forms a sealing lip enclosing the pin (15).

11. Device for conveying items according to Claims 9 and 10, **characterized in that** the pin (15) consists of a metal with a smooth polished surface.

12. Device for conveying items according to one of Claims 9 to 11, **characterized in that** the pin (15) is suspended in a flexibly adjustable manner.

13. Device for conveying items according to one of Claims 9 to 12, **characterized in that** the bore (16) is widened in a flared form in the region of the opening (16b).

14. Device for conveying items according to one of Claims 9 to 13, **characterized in that** the pin (15) is provided at its free end with a ball head (15a).

15. Device for conveying items according to Claim 14, **characterized in that** the ball head (15a) can be clamped frictionally and/or with a form fit at the inner end of the bore (16) in a corresponding recess in the flexible plastic material.

16. Device for conveying items according to one of Claims 9 to 15, **characterized in that** reinforcements (24, 25) acting as shock absorbers are let into the flexible plastic material in the region of the flared widening of the bore (16) and/or on the upper side of the holding element (17) facing the upper part (11) of the container (10).

17. Device for conveying items according to Claim 12, **characterized in that** the foot region of the pin (15) is embedded in a plastic or rubber material.

18. Device for conveying items according to one of Claims 7 to 17, **characterized in that** the upper part (11) of the container (10) is manufactured from plastic and the lower part (12) of the container (10) is manufactured from metal.

19. Device for conveying items according to Claim 18, **characterized in that** the upper part (11) of the container (10) is formed in the manner of a tray.

20. Device for conveying items according to one of Claims 7 to 19, **characterized in that** the upper part (11) of the container (10) is formed in such a way that it complements the lower part (12) of the container (10) and can be inserted into it.

## Revendications

1. Procédé pour transporter des marchandises, notamment des bagages, à travers un poste de radioscopie sur le trajet d'une voie de convoyage sur laquelle les marchandises sont transportées dans des récipients en plusieurs parties constitués chacun d'une partie inférieure guidée sur le convoyeur et d'une partie supérieure en forme de coque, recevant la marchandise et pouvant être séparée de la partie inférieure, **caractérisé en ce que** la partie supérieure est séparée de la partie inférieure en amont du poste de radioscopie, et **en ce que** la marchandise est transportée dans la partie supérieure en forme de coque séparée de la partie inférieure à travers le poste de radioscopie, tandis que la partie inférieure séparée est transportée en côtoyant le poste de radioscopie et, dans la région en aval du poste de radioscopie, la partie supérieure en forme de coque et la partie inférieure sont ré-assemblées en une unité pour la suite du transport.

2. Procédé pour transporter des marchandises suivant la revendication 1, **caractérisé en ce que** la partie supérieure en forme de coque et la partie inférieure sont, par des mouvements relatifs dirigés essentiellement verticalement entre la partie supérieure et la partie inférieure du récipient, séparées l'une de l'autre en amont du poste de radioscopie et assemblées l'une à l'autre par verrouillage amovible en aval du poste de radioscopie.

3. Procédé pour transporter des marchandises suivant les revendications 1 et 2, **caractérisé en ce que** les mouvements relatifs entre la partie supérieure et la partie inférieure du récipient en amont et en aval du poste de radioscopie sont produits par l'action d'une force extérieure.

4. Procédé pour transporter des marchandises suivant les revendications 1 à 3, **caractérisé en ce que** la partie supérieure en forme de coque et la partie inférieure de chaque récipient sont guidées dans au moins un rail de guidage respectif associé au parcours de convoyage respectif, les rails de guidage divergeant dans la direction de séparation des récipients et, au cours du mouvement de transport, produisant une séparation des deux parties du récipient en amont du poste de radioscopie et, par convergence des rails de guidage à l'encontre de la direction de séparation en aval du poste de radioscopie, une réunion des parties de récipient transportées en synchronisme.

5. Procédé pour transporter des marchandises suivant l'une des revendications 1 à 4, **caractérisé en ce que** les parcours de convoyage s'étendent essentiellement parallèlement entre eux dans la région du poste de radioscopie.

6. Dispositif pour transporter des marchandises (2), notamment des bagages, à travers un poste (3) de radioscopie sur le trajet d'une voie (4, 7) de convoyage sur laquelle les marchandises (2) sont transportées dans des récipients (10) en plusieurs parties constitués chacun d'une partie (12) inférieure guidée sur la voie (4, 7) de convoyage et d'une partie (11) supérieure en forme de coque, recevant la marchandise (2) et pouvant être séparée de la partie (12) inférieure, pour la mise en oeuvre du procédé suivant l'une des revendications 1 à 5, **caractérisé en ce que** la voie (4, 7) de convoyage comporte en amont du poste (3) de radioscopie un poste (5) de séparation où la partie (11) supérieure peut être séparée de la partie (12) inférieure, **en ce qu'**il est prévu dans la région du poste (3) de radioscopie deux parcours (8, 9) de convoyage dont l'un (8) transporte respectivement la partie (11) supérieure séparée, pourvue de la marchandise (2), à travers le poste (3) de radioscopie, et dont l'autre (9) guide la partie (12) inférieure séparée en dehors du poste (3) de radioscopie, en côtoyant ce dernier, et **en ce que** la voie (4, 7) de convoyage comporte, en aval du poste (3) de radioscopie, un dispositif (22) de réunion où la partie (11) supérieure et la partie (12) inférieure du récipient (10) peuvent être ré-assemblées en une unité pour la suite du transport.

7. Dispositif suivant la revendication 6, **caractérisé en ce qu'**il est prévu, pour la séparation et la réunion de la partie (11) supérieure et de la partie (12) inférieure du récipient (10), un verrouillage amovible qui est constitué d'au moins un tenon (15) pouvant être encliqueté dans un élément (17) de maintien, tenon(s) qui est ou sont disposé(s) sur la partie (11) supérieure ou la partie (12) inférieure du récipient (10).

8. Dispositif pour transporter des marchandises suivant la revendication 7, **caractérisé en ce que** le tenon (15) comporte un élargissement sphérique à son extrémité tournée vers l'élément (17) de maintien, et l'élément (17) de maintien est constitué pour l'essentiel, afin de former un élément à déclic, d'éléments sphériques qui sont précontraints transversalement au tenon (15) au moyen d'éléments de ressort, s'engagent derrière l'élargissement sphérique et sont guidés en coulissement transversalement au développement longitudinal du tenon (15).

9. Dispositif pour transporter des marchandises suivant la revendication 7, **caractérisé en ce que** l'élément (17) de maintien est constitué d'un perçage (16) pratiqué de préférence dans un élastomère ou matériau élastique analogue, perçage par lequel le matériau plastique élastique s'engage au moins partiellement autour du tenon (15) emboîtable et le serre par friction.

10. Dispositif pour transporter des marchandises suivant la revendication 9, **caractérisé en ce que** le perçage (16) est réalisé sous forme de perçage borgne qui comporte, dans sa région d'ouverture, un rétrécissement (18) qui forme une lèvre d'étanchéité entourant le tenon (15).

11. Dispositif pour transporter des marchandises suivant les revendications 9 et 10, **caractérisé en ce que** le tenon (15) est réalisé en un métal à surface lisse polie.

12. Dispositif pour transporter des marchandises suivant l'une des revendications 9 à 11, **caractérisé en ce que** le tenon (15) est monté en suspension avec une élasticité réglable.

13. Dispositif pour transporter des marchandises suivant l'une des revendications 9 à 12, **caractérisé en ce que** le perçage (16) est élargi en entonnoir dans la région (16b) d'ouverture.

14. Dispositif pour transporter des marchandises suivant l'une des revendications 9 à 13, **caractérisé en ce que** le tenon (15) est pourvu à son extrémité libre d'une tête (15a) sphérique.

15. Dispositif pour transporter des marchandises suivant la revendication 14, **caractérisé en ce que** la tête (15a) sphérique peut être serrée par friction et en engagement positif dans le matériau plastique élastique, dans un évidement correspondant à l'extrémité intérieure du perçage (16).

16. Dispositif pour transporter des marchandises suivant l'une des revendications 9 à 15, **caractérisé en ce que** des armatures (24, 25) jouant le rôle d'amortisseurs de chocs sont insérées dans le matériau plastique élastique dans la région de l'élargissement en entonnoir du perçage (16) et/ou sur la face supérieure, tournée vers la partie (11) supérieure du récipient (10), de l'élément (17) de maintien.

17. Dispositif pour transporter des marchandises suivant la revendication 12, **caractérisé en ce que** la région de pied du tenon (15) est encastrée dans un matériau plastique ou caoutchouteux.

18. Dispositif pour transporter des marchandises suivant l'une des revendications 7 à 17, **caractérisé en ce que** la partie (11) supérieure du récipient (10) est réalisée en matière plastique, et la partie (12) inférieure du récipient (10) en métal.

19. Dispositif pour transporter des marchandises suivant la revendication 18, **caractérisé en ce que** la partie (11) supérieure du récipient (10) est réalisée en forme de coque.

20. Dispositif pour transporter des marchandises suivant l'une des revendications 7 à 19, **caractérisé en ce que** la partie (11) supérieure du récipient (10) est réalisée de forme complémentaire à la partie (12) inférieure du récipient (10) et peut être emboîtée dans celle-ci.
